# EUROPEAN PATENT APPLICATION

(11) **EP 4 844 699 A1**
(43) Date of publication of application: **25.11.2026**
(21) Application number: 25178472.4
(22) Date of filing: 23.05.2025
(51) Int. Cl.: G06V 10/80, G06V 10/82, G06V 20/56

(54) **METHOD AND DEVICE FOR PROCESSING IMAGES USING DEPTH-GUIDED SENSOR FUSION**

(71) Applicant: TOYOTA JIDOSHA KABUSHIKI KAISHA, Toyota-shi, Aichi-ken 471-8571 (JP); ETH Zurich, 8092 Zürich (CH)
(72) Inventor: ABBELOOS, Wim, 1140 Brussels (BE); BROEDERMANN, Tim, 8092 Zurich (CH); SAKARIDIS, Christos, 8092 Zurich (CH); PICCINELLI, Luigi, 8092 Zurich (CH); VAN GOOL, Luc, 8092 Zurich (CH)
(74) Representative: Cabinet Beau de Loménie

(57) **Abstract**

The present invention relates to a method and device for processing an input image (IMG) using a machine learning model (MOD) comprising:
- a depth-features extraction module (DFE) configured to compute (S300) depth features (d₁) based on the input image (IMG), depth measurements (LDR) and other sensed data (RDR, EVT), and
- one or more fusion modules (DGF₁-DGF₃) configured to compute (S500) one or more multi-modal feature maps (F_{M1}-F_{M3}) based on the input image (IMG), the depth measurements (LDR), the other sensed data (RDR, EVT), and the depth features (d₁).

## Description

### BACKGROUND OF THE INVENTION

### 1. Field of the invention

The present invention relates to the field of sensor fusion. More particularly, the present invention relates to a method and device for processing images using depth-guided sensor fusion. It also relates to a method for training a machine-learning model, a system, a computer program, and a computer-readable medium. The present invention is particularly advantageous for implementing driving assistance systems for autonomous vehicles, but such an application is only given as an illustrative example.

### 2. Description of Related Art

The present invention lies in (but is not limited to) the context of image segmentation for driving assistance systems. In this context, semantic image segmentation is used to detect and classify objects such as pedestrians, vehicles, and sidewalks in images captured by on-board cameras.

Conventional image segmentation solutions typically rely on a single type of sensor (*i.e.,* cameras). However, their performance degrades in adverse environmental conditions, such as fog, rain, or low light.

To overcome this limitation, image segmentation solutions have been developed that combine data from multiple sensors of different types (*e.g.,* cameras, lidars, radars). These solutions use sensor fusion techniques to leverage the complementary strengths of the different sensors.

Despite these efforts, existing sensor fusion techniques for image segmentation are not entirely satisfactory. Their robustness in adverse environmental conditions can still be improved.

There is therefore a need for a solution that allows robust sensor fusion, in particular in adverse environmental conditions.

### SUMMARY

The present invention has been made in the light of the above problems.

According to an aspect, the present invention provides a computer-implemented method for processing at least one input image using a machine learning model, the method comprising:
- a step of computing depth features based on the input image, depth measurements, and other sensed data using a depth-features extraction module of the machine learning model (the depth measurements and the other sensed data being associated with the input image), and
- a step of computing one or more multi-modal feature maps based on the input image, the depth measurements, the other sensed data, and the depth features using one or more fusion modules of the machine learning model (also referred to as the *"depth-guided fusion modules*").

Within the context of the present invention, we use the term *"multi-modal feature map"* to refer to a feature map computed based on data from multiple types of sensors (*e.g.,* the input image and the depth measurements). Accordingly, we use the term *"fusion module"* to refer to a module computing a multi-modal feature map based on data from multiple types of sensors.

The present invention proposes computing depth features and using them to guide the sensor fusion implemented by the fusion modules.

More specifically, the depth features are computed based not only on the depth measurements, but also on the input image and the other sensed data. This allows benefiting from the complementary strengths of the different sensors to compute accurate depth features that are then used to guide the sensor fusion.

The use of the depth features results in an improved robustness of the sensor fusion in adverse conditions. In fact, depth is one of the significant factors influencing the reliability of the different sensors. For instance, lidars provide accurate depth measurements for nearby objects, but their accuracy degrades at greater distances (especially in fog or snowfall); radars are usually reliable at long distances even in adverse conditions, but may suffer from significant noise due to multipath effects; and cameras are only reliable in well-lit conditions. In other words, environmental conditions introduce spatial variations in the signal-to-noise ratio of each sensor. The use of depth features therefore allows the fusion modules to adapt the fusion mechanism to the spatial variability in the reliability of different sensors and provide a robust sensor fusion.

Experimental results show that the proposed sensor fusion solution provides performance gains not only in adverse conditions, but in all conditions. Specifically, when applied to image segmentation, the proposed solution significantly outperforms state-of-the-art solutions using existing sensor fusion techniques.

For these reasons, the present invention provides a solution that allows robust sensor fusion, and in particular in adverse environmental conditions.

As detailed hereinafter, the present invention can be applied to image segmentation. However, it is not limited to this application and also applies to image detection.

According to an embodiment, the machine learning model comprises multiple fusion modules, each fusion module computing respectively a multi-modal feature map based on:
- (as a primary modality) a feature map of the input image, and
- (as a secondary modality) a feature map of the depth measurements or a feature map of the other sensed data, and
- (as guidance) the depth features.

In this embodiment, the machine learning model comprises multiple fusion modules respectively computing multi-modal feature maps. Each fusion module fuses the primary camera modality with a secondary modality (the depth measurements, or the other sensed data), guided by the depth features. This contributes to achieving robust sensor fusion, by adapting the fusion mechanism to the spatial variability in the reliability of different sensors.

According to an embodiment, at least one fusion module (or each fusion module) comprises one or more cross-attention modules.

In this embodiment, the fusion module uses cross-attention modules to implement the sensor fusion and compute the multi-modal feature map. The use of a cross-attention module allows efficiently fusing a secondary sensor modality (the depth measurements, or the other sensed data) with the primary camera modality. This allows capturing the relationships between the primary and secondary modalities to learn discriminative representations for image segmentation (respectively detection).

According to an embodiment, the depth-feature extraction module comprises:
- a multi-layer perceptron taking as input a concatenation of feature maps of the input image, the depth measurements, and the other sensed data, and
- a residual connection adding the feature map of the input image to the output of the multi-layer perceptron to compute the depth features.

This embodiment proposes using a multi-layer perceptron with a residual connection to compute the depth features. The multi-layer perceptron takes as input all available modalities. This allows benefiting from the complementary strengths of the different sensors to compute accurate depth features. Also, the residual connection of the image features ensures a stable gradient flow. This embodiment therefore allows computing depth features that accurately characterize the depth of the objects in the input image.

According to an embodiment, the method comprises:
- a step of computing a condition token based on the input image using a condition estimation module of the machine learning model,

And, according to this embodiment:
- the step of computing the one or more multi-modal feature maps is further based on the condition token.

This embodiment proposes using not only the depth features to guide the sensor fusion, but also a condition token (*i.e.,* a token representative of the environmental condition of the scene in the input image).

As mentioned above, the environmental condition is also one of the significant factors affecting the reliability of the sensors. The use of the condition token allows the fusion modules to adapt the fusion mechanism to the variability in the reliability of the sensors in the different environmental conditions.

The synergy between the condition token and depth features is especially beneficial in adverse conditions, which cause pronounced spatial variations in sensor reliability.

This embodiment allows improving the robustness of the proposed sensor fusion.

According to an embodiment, the condition estimation module comprises a transformer computing the condition token based on the input image.

In this embodiment, the condition token is computed using a transformer. The use of a transformer allows computing a condition token that accurately characterizes the environmental condition of the scene in the input image.

According to an embodiment, the other sensed data includes radar measurements and/or event data provided by an event camera.

In addition to the depth measurements (*e.g.,* provided by a lidar), this embodiment proposes using radar measurements and/or event data provided by an event camera. This allows leveraging the complementary strengths of these additional sensors. This embodiment contributes to providing accurate and robust image segmentation (respectively image detection) in all conditions.

The present invention is not limited to these particular types of sensed data. Further embodiments could be envisaged wherein other additional sensors are used.

According to an embodiment, the method comprises:
- a step of segmenting the input image based on the one or more multi-modal features using a segmentation module of the machine learning model, class and/or instance labels being assigned to the pixels of the input image to obtain a segmented image.

In this embodiment, the proposed solution is applied to image segmentation (semantic, instance, or panoptic segmentation), which benefits from the robust sensor fusion implemented by the fusion modules. This allows segmenting images accurately and robustly, even in adverse conditions. Experimental results confirm that the proposed solution provides significant performance gains in terms of segmentation accuracy.

As mentioned above, the present invention is not limited to image segmentation and also applies to image detection (*e.g.,* detection of objects or humans in the input image, or even anomaly detection).

According to an embodiment, the method comprises:
- a step of determining a control command for a vehicle or a robot based on the segmented image.

In this embodiment, the proposed solution is applied to driving assistance or robotics. That is, the segmented images are used to determine vehicle or robot control commands. Since the proposed solution allows robust and accurate image segmentation even in adverse conditions, it follows that this embodiment improves vehicle safety or robot guidance.

According to another aspect, the present invention provides a computer-implemented method for training a machine learning model, the method comprising for at least one training image:
- a step of computing depth features and one or more multi-modal feature maps for the training image using a method according to the invention,
- a step of evaluating a multi-task loss function comprising:
   ∘ a depth loss component evaluated based on:
      ∘ depth predictions computed by a depth-estimation module for the training image based on the depth features, and
      ∘ depth measurements for the training image,
   ∘ a recognition loss component (*e.g.,* a segmentation loss component or detection loss component) evaluated based on:
      ∘ recognition predictions (*e.g.,* a segmentation predictions or detection predictions) computed by the machine learning model for the training image based on the one or more multi-modal feature maps, and
      ∘ labels of the training image,
- a step of updating parameters of the machine learning model to minimize the multi-task loss function.

The proposed method for training the machine learning model is based on a multi-task loss function combining a depth loss component and a recognition loss component.

On the one hand, the depth loss component ensures that the machine learning model provides accurate depth features, which are then used to guide the sensor fusion implemented by the fusion modules.

On the other hand, the recognition loss component ensures that the machine learning model provides accurate recognition predictions (image segmentation or detection) using the multi-modal feature maps computed by the fusion modules.

The proposed training method allows the machine learning model to be trained to implement accurate and reliable recognition using robust sensor fusion even in adverse conditions.

According to an embodiment, the depth loss component comprises an error loss component evaluated based on:
- the depth predictions computed by the depth-estimation module, and
- the depth measurements for the training image.

The use of the error loss component allows training the machine learning model to provide accurate depth predictions, using the depth measurements as ground-truths. This contributes to providing accurate depth features that can be then used to guide the sensor fusion.

According to an embodiment, the depth loss component comprises an edge smoothness loss component evaluated based on:
- depth gradients of the depth predictions for the training image, and
- intensity gradients of the training image.

The edge smoothness loss component is used to penalize large depth gradients in regions of homogeneous intensity in the image. Since the proposed training method uses depth measurements as both input and output, this loss component ensures that the machine learning model does not learn to merely provide depth predictions that match the acquired depth measurements. Instead, this loss component ensures that the depth predictions remain geometrically regular (*i.e.,* smooth even where no depth measurements are available). This contributes to providing plausible depth predictions for the entire image and learning accurate depth features that guide sensor fusion.

According to an embodiment, the depth loss component comprises a panoptic-edge smoothness loss component evaluated based on:
- depth gradients of the depth predictions for the training image, and
- panoptic labels of the training image.

This embodiment proposes using panoptic segmentation labels as ground truths to guide the depth estimation. In depth maps, sharp discontinuities usually coincide with object boundaries, including both semantic class boundaries and instance-level boundaries within the same class. The panoptic edge loss component ensures that depth gradients respect both class and instance boundaries. This contributes to providing accurate depth predictions.

According to an embodiment, the multi-task loss function comprises a condition loss component evaluated based on:
- a condition token computed by a condition estimation module of the machine learning model, and
- scene attributes associated with the training image (scene attributes, including weather condition, precipitation type and level, ground condition, time of day, and sky condition).

This embodiment allows training the machine learning to provide an accurate condition token to guide the sensor fusion.

According to an embodiment, the recognition loss component is a segmentation loss component evaluated based on:
- the segmentation predictions provided by a segmentation module of the machine learning model for the training image based on the one or more multi-modal feature maps, and
- the labels of the training image.

In this embodiment, the machine learning model is used for image segmentation. Accordingly, the recognition loss is a segmentation loss evaluated based on the segmentation predictions provided by the machine learning model and the labels of the training image. This allows training the machine learning model for accurately segmenting images, even in adverse conditions.

According to another aspect, the present invention provides a device for processing at least one input image, the device comprising at least one processor and memory, and being configured to implement a machine learning model comprising:
- a depth-features extraction module configured to compute depth features based on the input image, depth measurements and other sensed data, and
- one or more fusion modules configured to compute one or more multi-modal feature maps based on the input image, the depth measurements, the other sensed data, and the depth features.

The proposed image processing device may be configured to implement any of the steps (and operations) described herein.

According to an embodiment, the machine learning model has been trained using the training method according to the invention.

According to another aspect, the present invention provides a system comprising:
- a camera for capturing an image,
- a set of sensors comprising a depth sensor for acquiring depth measurements, and one or more other sensors for acquiring sensed data, and
- an image processing device according to claim 16 for processing the captured image.

According to an embodiment, the system is a driving assistance further comprises:
- a control device configured to determine a control command for a vehicle or a robot based on the outputs of the image processing device.

According to another aspect, the present invention provides a vehicle or a robot comprising an image processing device according to the invention, or a system according to the invention.

According to another aspect, the present invention provides a computer program comprising instructions which, when the program is executed by at least one processor or a computer, cause said at least one processor or computer to implement a method according to the invention for processing an image, or a method according to the invention for training a machine learning model.

It should be noted that the computer program referred to here may use any programming language, and be in the form of source code, object code, or code intermediate between source code and object code, such as in a partially compiled form.

According to another aspect, the invention provides a computer-readable medium having stored thereon the computer program according to the invention.

The computer-readable medium referred to here may be any entity or device capable of storing the program and readable by any computer equipment, including a computer. For example, the medium may include a storage medium, or a magnetic storage medium, such as a hard drive. Alternatively, the storage medium may correspond to a computer integrated circuit in which the program is incorporated.

It should be emphasized that the proposed image processing device, system, vehicle, robot, computer program, and medium present the advantages described above in relation with the proposed method for processing an image.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 illustrates the architecture of a driving assistance system embedded in a vehicle according to an embodiment of the invention,
FIGS. 2A and 2B illustrate the architecture of a machine learning model and steps of a method according to an embodiment of the invention,
FIGS. 3A and 3B illustrate the architecture of the depth-guided fusion modules of the machine learning model and the steps implemented by these modules according to an embodiment of the invention,
FIGS. 4A and 4B illustrate steps of a method for training a machine learning model according to an embodiment of the invention.

### DETAILED DESCRIPTION OF EMBODIMENTS

The present invention is particularly advantageous for implementing a driving assistance system. The following description of the invention will refer to this particular application, which is provided only as an illustrative example and should not limit the invention. The present invention also applies to other computer vision applications, such as robotics, or augmented reality.

Similarly, the present invention is presented below with reference to its application to image segmentation (semantic, instance, or panoptic). However, it is not limited to this particular application and also applies to images detection (*e.g.,* detection of particular objects or humans in the image, or anomaly detection).

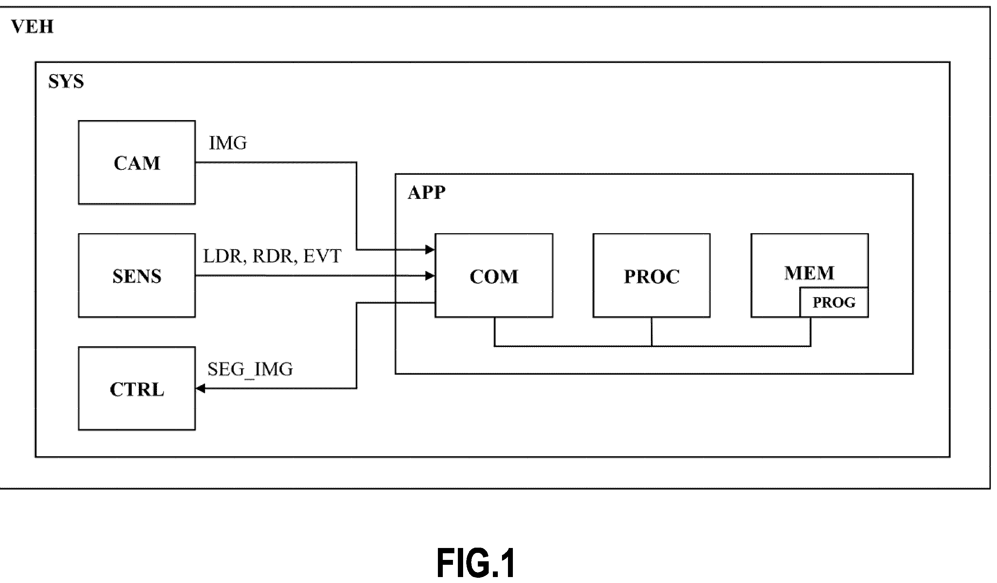

**FIG. 1** illustrates the architecture of a driving assistance system embedded in a vehicle according to an embodiment of the invention. This figure is described hereinafter to introduce the context of the invention and provide an example application.

The driving assistance system SYS of FIG. 1 comprises at least one camera CAM, a set of sensors SENS, an image processing device APP, and a control device CTRL. The driving assistance system SYS is embedded in a vehicle VEH.

The camera CAM is configured to capture an input image IMG. The set of sensors SENS comprises a depth sensor for acquiring depth measurements LDR, and one or more other sensors for acquiring sensed data. For instance, the set of sensors SENS may include a radar for acquiring radar measurements RDR and/or an event camera for acquiring event data EVT. Within the context of the invention, other additional sensors could be used.

The image processing device APP is configured to perform image segmentation on the input image IMG and provide a segmented image SEG_IMG. Specifically, the device APP assigns class and/or instance labels to the pixels of the input image IMG, such that the segmented images SEG_IMG are images having class-level and/or instance-level labels associated with their pixels. For example, the device APP can identify in the input image IMG collections of pixels that form distinct objects such as vehicles, pedestrians, traffic signs.

The image processing device APP is further configured to provide the segmented images SEG_IMG to the control device CTRL. The control device CTRL is configured to determine control commands for the vehicle VEH based on the segmented images SEG_IMG. For example, the control device CTRL may issue a braking command if a pedestrian is detected in the segmented images SEG_IMG.

Alternatively, the image processing device APP could provide the segmented images SEG_IMG to a restitution device for display, or to a database for storage, or to another device via a communication network.

The image processing device APP of FIG. 1 comprises at least one processing unit or processor PROC, and at least one memory MEM.

The device APP also comprises a communication module COM configured to communicate with the camera CAM, the set of sensors SENS, and/or the control device CTRL.

More particularly, according to an embodiment, the image processing device APP has the hardware architecture of a computer. It may include a processor PROC, a random access memory, a read-only memory MEM, and a non-volatile memory. The memory MEM constitutes a storage medium conforming to the invention. The memory MEM is readable by processor PROC and stores a computer program PROG conforming to the invention. The computer program PROG comprises instructions for carrying out steps of an image segmentation method conforming to the invention, when the computer program PROG is executed by the processor PROC.

In particular, the PROG program implements a machine learning model MOD for processing images. The architecture of the proposed model MOD and its operation are described hereinafter.

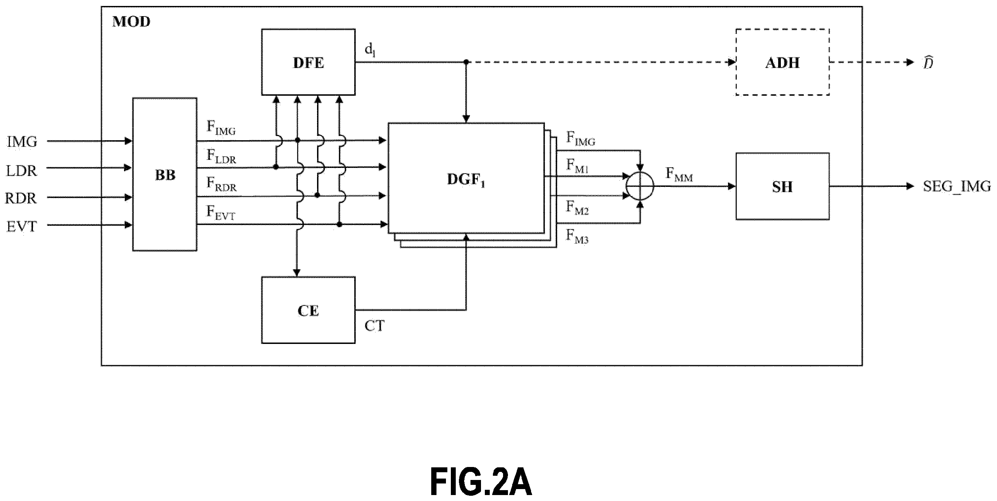

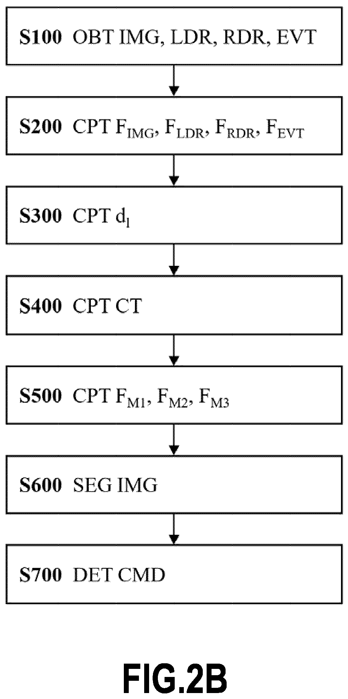

**FIGS. 2A** **and** **2B** illustrate the architecture of a machine learning model and steps of a method according to an embodiment of the invention.

As shown in FIG. 2A, the proposed machine learning model MOD comprises the following modules: a feature extraction module BB, a depth-features extraction module DFE, a condition estimation module CE, depth-guided fusion modules DGF₁-DGF₃, and a segmentation module SH. We describe the functions of these different modules in relation to the steps of FIG. 2B.

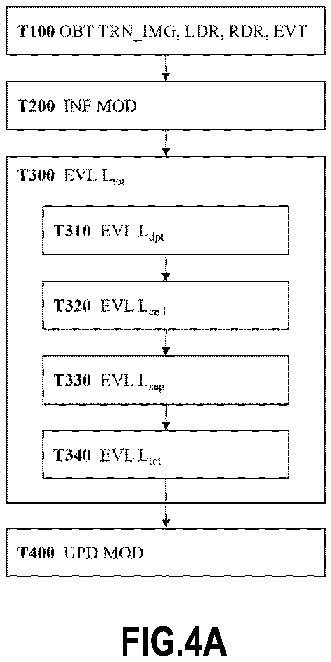

It should also be noted that the proposed machine learning model MOD comprises a depth estimation module ADH (also referred to as the *"auxiliary depth head"* or *"depth estimation branch*") which is not used during inference, but during training as presented below (FIGS. 4A-4B).

As shown in FIG. 2B, the proposed method comprises (all or part of) steps S100-S700 implemented by the system SYS.

At step S100, the image processing device APP obtains the input image IMG, the depth measurements LDR, and the other sensed data RDR, EVT.

The device APP may receive the input image IMG from the camera CAM, and the sensed data LDR, RDR, EVT from the set of sensors SENS. Alternatively, the device APP may read those in a shared memory.

At step S200, the feature extraction module BB computes a feature map F_{IMG} of the input image IMG, a feature map F_{LDR} of the depth measurements LDR, a feature map F_{RDR} of the radar measurements RDR, and a feature map F_{EVT} of the event data EVT.

In an example implementation, the various input modalities are processed with a shared backbone (pre-trained) comprising modality-specific feature adapters.

At step S300, the depth-features extraction module DFE computes depth features d₁ based on the input image IMG, the depth measurements LDR, and the other sensed data RDR, EVT.

In a particular embodiment, the depth-features extraction module DFE uses a multi-layer perceptron with a residual connection as follows. The feature maps F_{IMG}, F_{LDR}, F_{RDR}, F_{EVT} are concatenated along the channel dimension. The multi-layer perceptron (*e.g.,* a two-layers perceptron) takes as input a concatenation of the feature maps F_{IMG}, F_{LDR}, F_{RDR}, F_{EVT}. And, the residual connection adds the feature map F_{IMG} to the output of the multi-layer perceptron to obtain the depth features d₁.

In other words, the depth-features extraction module DFE implements a fusion mechanism to obtain the depth features d₁. This allows benefiting from the complementary strengths of the different sensors to compute accurate depth features. Also, the residual connection of the image features ensures a stable gradient flow. This depth-features extraction module DFE therefore allows computing depth features that accurately characterize the depth of the objects in the input image.

The proposed method for training the depth-features extraction module DFE is described hereinafter in reference to FIGS. 4A-4B.

At step S400, the condition estimation module CE computes a condition token CT based on the input image IMG.

In a particular embodiment, the condition estimation module CE uses a transformer for computing the condition token CT. In an example implementation, the highest-level features of the feature map F_{IMG} are flattened and then provided to a transformer composed of two encoder layers and two decoder layers which outputs the condition token CT.

The proposed method for training the condition estimation module CE is described hereinafter in reference to FIG. 4A.

At step S500, the depth-guided fusion modules DGF₁-DGF₃ respectively compute multi-modal feature maps F_{M1}-F_{M3} based on the input image IMG, the depth measurements LDR, and the other sensed data RDR, EVT.

Specifically, each one of the fusion modules DGF₁-DGF₃ respectively fuses each one of the secondary modalities (depth, radar, event) with the primary camera modality.

In addition, the depth-guided fusion modules DGF₁-DGF₃ are guided by the depth features d₁ and the condition token CT.

The depth is one of the significant factors influencing the reliability of the different sensors. Therefore, the use of depth features therefore allows the fusion modules to adapt the fusion mechanism to the spatial variability in the reliability of different sensors and provide a robust sensor fusion.

Similarly, the environmental condition is also one of the significant factors influencing the reliability of the different sensors. The use of the condition token allows the fusion modules to adapt the fusion mechanism to the variability in the reliability of the sensors in the different conditions.

The synergy between the condition token and the depth features is especially beneficial in adverse conditions, which cause pronounced variations in sensor reliability.

Experimental results show that the proposed sensor fusion solution provides performance gains not only in adverse conditions, but in all conditions. These experimental results are detailed hereinafter (Table 1).

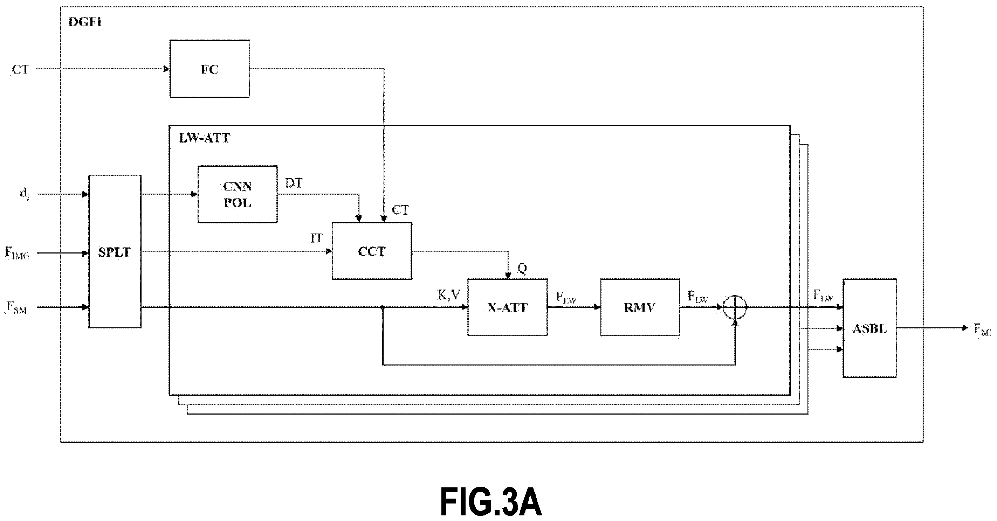

We detail below the architecture and the operation of the depth-guided fusion modules DGF₁-DGF₃ (FIGS. 3A-3B). We also detail the proposed method for training the depth-guided fusion modules DGF₁-DGF₃ (FIGS. 4A-4B).

The various feature maps F_{M1}-F_{M3} provided by the depth-guided fusion modules DGF₁-DGF₃ are summed together with the feature map F_{IMG} to obtain a multi-modal feature map F_{MM}.

At step S600, the segmentation module SH (also referred to as the *"segmentation head"* or *"segmentation branch"*) segments the input image IMG based on the multi-modal feature map F_{MM}. That is, the segmentation module SH assigns class and/or instance labels to the pixels of the input image IMG to obtain a segmented image SEG_IMG.

The proposed image segmentation solution (semantic, instance, or panoptic) benefits from the robust sensor fusion implemented by the depth-guided fusion modules DGF₁-DGF₃. This allows segmenting images accurately and robustly, even in adverse conditions.

In a particular embodiment, the segmentation module SH comprises a transformer for segmenting the input image IMG based on the multi-modal feature map F_{MM}. In an example implementation, the segmentation module SH uses the OneFormer model proposed in Jitesh Jain et al., "OneFormer: One transformer to rule universal image segmentation", in CVPR, 2023. However, other implementations could be envisaged.

At step S700, the control device CTRL determines a control command CMD (*e.g.,* a braking command or a direction command) for the vehicle VEH based on the segmented image SEG_IMG.

As mentioned above, the proposed solution provides a robust and accurate image segmentation even in adverse conditions. Improved vehicle safety follows as a result.

We have described above the overall architecture of the proposed machine learning model MOD for processing an image IMG. We detail below the architecture and operations of the depth-guided fusion modules DGF (FIGS. 3A-3B). Then, we will detail the training of the machine learning model MOD (FIGS. 4A-4B).

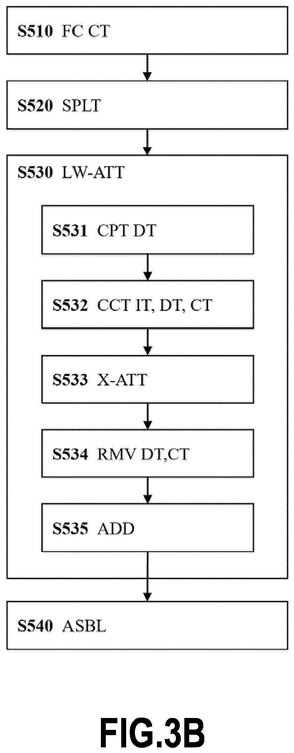

**FIGS. 3A** **and** **3B** illustrate the architecture of the depth-guided fusion module of the machine learning model and the steps implemented by this module according to an embodiment of the invention.

We recall that each depth-guided fusion module DGFᵢ is configured to output - at step S500 - a multi-modal feature map F_{Mi}. That is, each depth-guided fusion module DGFᵢ is configured to fuse the primary camera modality with a secondary sensor modality (depth, radar, or event). Each fusion module DGFᵢ is guided by the depth features d₁ and the condition token CT.

We describe the various modules of the depth-guided fusion module DGFᵢ illustrated in FIG. 31 in relation to the steps illustrated in FIG. 3B

As shown in FIG. 3B, step S500 comprises (all or part of) steps S510-S540 implemented by each depth-guided fusion module DGFᵢ.

At step 510, the condition token CT is passed through a fully-connected layer FC of the fusion module DGFᵢ to match the dimensionality of the other feature map tokens.

At step S520, a splitter SPLT of the fusion module DGFᵢ splits the image feature map F_{IMG}, the feature map F_{SM} of the secondary modality (depth, radar, or event), and the depth features d₁ into local windows of size K_{w}×K_{w}.

At steps 530, the various local windows are respectively processed (in parallel) by multiple local-window attention modules LW-ATT of the fusion module DGFᵢ.

Each local-window attention module LW-ATT implements steps S531-S535 to obtain a local-window multi-modal feature map F_{LW}.

At step S531, the depth features from each local window are passed through a two-dimensional convolutional network CNN and a mean pooling POL to obtain a local depth token DT. This token represents the local depth context in the relevant local window.

At step S532, the local depth token DT is concatenated with the corresponding image token IT and the condition token CT (using a concatenation module CCT).

At step S533, a cross-attention module X-ATT takes as input the concatenation of the image, depth, and condition tokens (as query Q) and the secondary modality token (as key K and value V).

The cross-attention module X-ATT outputs the feature map F_{LW} (fusing the primary and secondary modalities).

In an example implementation, the cross-attention module X-ATT uses a standard attention head. However, other implementations can be envisaged.

At step S534, the local depth token DT and the condition token CT are removed from the feature map F_{LW} to restore the original spatial dimensions of the image token IT (using a remover RMV).

At step S535, the local-window features of the secondary modality are added to the feature map F_{LW} via a residual connection.

At step S540, an assembler ASBL of the fusion module DGFᵢ reassembles the various local-window feature maps F_{LW} to obtain the multi-modal feature map F_{Mi}.

The proposed architecture for the depth-guided fusion module contributes to achieving robust sensor fusion. The proposed architecture allows adapting the fusion mechanism to the spatial and condition variability in the reliability of the different sensors.

In particular, the use of cross-attention modules allows efficiently fusing a secondary modality (depth, radar, event) with the primary camera modality. This allows capturing the relationships between the primary and secondary modalities to learn discriminative representations for image segmentation.

We have presented above the architecture and operation of the proposed machine learning model MOD. We now present its training.

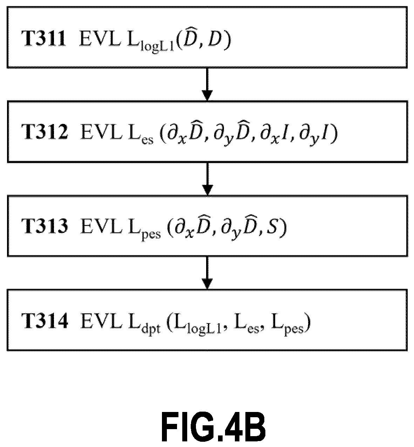

**FIGS. 4A** **and** **4B** illustrate steps of a method for training a machine learning model according to an embodiment of the invention.

It is proposed here to train the proposed machine learning model MOD using a multi-task paradigm. As will be detailed below, the loss function used to train the machine learning model MOD is a multi-task loss function combining a depth loss component and a recognition loss function.

It should also be noted that the proposed training method uses the depth measurements not only as input data, but also as output data (*i.e.,* as ground truth) for training the machine learning model MOD. As detailed below, the depth measurements are used for training the machine learning model MOD to compute the depth features d₁, which are then used to guide sensor fusion.

The machine learning model MOD is trained using a set of training images. This set of training images can comprise real-world images, and/or computer-generated images. These training images comprise labels as further detailed below.

As shown in FIG. 4A, the proposed training method comprises (all or part of) the following steps T100-T400, and may include one or more iterations of each of these steps.

At step T100, a training image TRN_IMG is obtained, as well as depth measurements LDR, and other sensed data RDR, EVT associated with the training image TRN_IMG.

At step T200, an inference of the machine learning model MOD is performed for the training image TRM_IMG.

That is, steps S200-S600 are implemented by the machine learning model MOD for the training image TRN_IMG. The machine learning model MOD thereby computes depth features d₁, a conduction token CT, and a segmented image SEG_IMG.

In addition, the depth-estimation module ADH of the machine learning model MOD computes depth predictions *D̂* for the training image TRN_IMG based on the depth features d₁. The depth-estimation module may use a neural network to compute the depth predictions *D̂*. In an example implementation, it uses a Semantic FPN decoder as presented in Kirillov et al., "Panoptic feature pyramid networks", IEEE/CVF, 2019.

At step T300, the multi-task loss function Lₜₒₜ is evaluated. To this end, step T300 comprises (all or part) of steps T310-T340.

At step T310, a depth loss component L_{dpt} is evaluated based on depth predictions *D̂* and the depth measurements *D* for the training image TRN_IMG.

We detail the depth loss component L_{dpt} hereinafter in reference to FIG. 4B.

At step T320, a condition loss component L_{cnd} is evaluated based on the condition token CT computed by the condition estimation module CE and scene attributes associated with the training image TRN_IMG.

In an example implementation, the condition loss component L_{cnd} relies on a verbo-visual contrastive loss utilizing text prompts based on a detailed description of the environmental conditions of the training image TRN_IMG. Such example implementation is presented in Brödermann et al., "CAFuser: Condition-Aware Multimodal Fusion for Robust Semantic Perception of Driving Scenes", 2025*.*

At step T330, the recognition loss component L_{seg} is evaluated.

Specifically, in this embodiment, the recognition loss component L_{seg} is a segmentation loss component evaluated based on the segmented image SEG_IMG provided by the machine learning model MOD and the labels S of the training image TRN_IMG (*e.g.,* panoptic labels).

In an example implementation, the loss component L_{seg} is implemented using the full segmentation loss used in OneFormer as presented in Jitesh Jain et al., "OneFormer: One transformer to rule universal image segmentation", in CVPR, 2023.

However, the present invention is not limited to this example implementation. Other implementations of the loss component L_{seg} can be envisaged.

At step T340, the multi-task loss function Lₜₒₜ is evaluated based on the depth loss component L_{dpt}, the condition loss component L_{cnd}, and the recognition loss component L_{seg}.

For instance, the multi-task loss function Lₜₒₜ can be evaluated using the following expression: Lₜₒₜ = λ_{seg} · L_{seg} + λ_{cnd} · L_{cnd} + λ_{dpt} · L_{dpt}, where parameters λ_{seg}, λ_{cnd}, λ_{dpt} are positive real numbers.

At step S400, the parameters of the machine learning model MOD are updated to minimize the multi-task loss function Lₜₒₜ.

For example, as previously mentioned, the proposed machine model MOD can be implemented using neural networks (*e.g.,* multi-layer perceptrons, transformers, cross-attention modules, *etc*.), and the weights of the neural networks can be updated using backpropagation (except for pre-trained modules). Other parameters of the machine learning model MOD could also be updated to minimize the loss function, such as the number of neurons, or the number of layers.

We have given above a general description of the proposed method for training the machine learning model MOD. We detail below the proposed depth loss component L_{dpt}.

As shown in FIG. 4B, step T310 of evaluating the depth loss component L_{dpt} comprises (all or part of) steps T311-T314.

It is important to note that the depth measurements used for the training can be noisy and unreliable, especially in adverse conditions. To address this, and effectively train the depth estimation module ADH, the depth loss component L_{dpt} uses three loss components which we describe below.

At step T311, an error loss component L_{logL1} is evaluated based on the depth predictions *D̂* computed by the depth-estimation module DAH, and the depth measurements *D̂* for the training image TRN_IMG.

In an embodiment, the error loss component L_{logL1} is evaluated for a subset of pixels P_{τ} of the training image TRN_IMG. This subset P_{τ} comprises pixels for which a depth error rₚ is less than or equal to a certain quantile of depth errors of the pixels of the training image.

The depth measurements can be noisy and unreliable in adverse conditions. For this reason, it is proposed to use the L1 loss, which is inherently more robust to outliers than the L2 loss, and also to use the logarithmic scale to handle depth variations between orders of magnitude.

Furthermore, since depth measurements can be severely corrupted in adverse conditions, the direct supervision of the depth predictions using all available depth measurements can be detrimental to the training of the model. It is therefore proposed to limit the loss computation to a more reliable subset of pixels (*i.e.,* the pixels below the τ-quantile of depth errors).

To this end, we define the absolute log-error at pixel p as follows: ${r}_{p} = \left|log\left({\hat{D}}_{p}\right)-log\left({D}_{p}\right)\right|$
where *D̂ₚ* is the depth prediction for the p-pixel and *Dₚ* the depth measurement for this pixel. We define the subset of valid pixels P_{τ} used for supervision as follows: ${P}_{τ} = \left\{p∈{P}_{l}:{r}_{p}\leq {Quantile}_{τ}\left(\left\{{r}_{q}:q∈{P}_{l}\right\}\right)\right\} ,$
where *Pₗ* denotes the set of pixels containing a depth measurement and Quantile_{τ} returns the τ -quantile of the error values.

Then, the error loss component L_{logL1} is computed using the following expression: ${L}_{{logL}_{1}} = \frac{1}{\left|{P}_{τ}\right|} {\sum }_{p ∈ {P}_{τ}} {r}_{p} .$

At step T312, an edge smoothness loss component Lₑₛ is evaluated based on the depth gradients *∂ₓD̂ , ∂_{y}D̂* of the depth predictions *D̂* and the intensity gradients ∂*ₓI,* ∂*_{y}I* of the training image TRN_IMG.

Specifically, the depth gradients are weighted with the local intensity gradients in the training image. This contributes to providing smooth depth predictions while preserving discontinuities at actual object boundaries.

For instance, the edge smoothness loss component Lₑₛ can be computed as follows: ${L}_{es} = \frac{1}{\left|P\right|} {\sum }_{p ∈ P} \left(\left|{\partial }_{x}{\hat{D}}_{p}\right|{e}^{- \left|{\partial }_{x}{I}_{p}\right|}+\left|{\partial }_{y}{\hat{D}}_{p}\right|{e}^{- \left|{\partial }_{y}{I}_{p}\right|}\right)$
where I is the image intensity, *∂ₓD̂ₚ* and *∂ₓIₚ* are approximate derivatives in the x-direction (resp. for y) for pixel p, and P is the set of all pixels in the training image TRN_IMG.

The edge smoothness loss component penalizes large depth gradients in regions of homogeneous intensity in the image. Since the proposed training method uses depth measurements as both input and output, this loss component ensures that the machine learning model does not learn to merely provide depth predictions that match the acquired depth measurements. Instead, this loss component ensures that the depth predictions remain geometrically regular (*i.e.,* smooth even where no depth measurements are available).

At step T313, a panoptic-edge smoothness loss component Lₚₑₛ is evaluated based on the depth gradients *∂ₓD̂, ∂_{y}D̂* of the depth predictions *D̂* and the panoptic labels S of the training image TRN_IMG.

This loss component uses panoptic segmentation labels as ground truths to guide the depth estimation. In depth maps, sharp discontinuities usually coincide with object boundaries, including both semantic class boundaries and instance-level boundaries within the same class. The panoptic edge loss component ensures that depth gradients respect both class and instance boundaries.

Specifically, a binary mask is first computed based on the panoptic labels to determine where depth gradients should be penalized as follows: ${B}_{p}^{x} = \left\{\begin{matrix}0 , if S \left(p\right) \neq S \left(p+Δx\right) \\ 1 , otherwise\end{matrix}\right.$ ${V}_{p}^{x} = \left\{\begin{matrix}1 , if S \left(p\right) \neq ∅ and S \left(p+Δx\right) = ∅ \\ 0 , otherwise\end{matrix}\right.$

Here, Δx is a one-pixel shift in the x-direction and S are the panoptic labels.

After, the mask *B^{x}* is dilated by a k×k kernel (*e.g.,* k = 3) to take into account imperfect edge localization.

We define: ${w}_{p}^{x} = {B}_{p}^{x} {V}_{p}^{x}$
and define ${w}_{p}^{y}$ similarly for the y-direction.

Then, the panoptic-edge smoothness loss component Lₚₑₛ can be evaluated using the expression: ${L}_{pes} = \frac{1}{\left|P\right|} {\sum }_{p ∈ P} \left({w}_{p}^{x}\left|{\partial }_{x}{\hat{D}}_{p}\right|+{w}_{p}^{y}\left|{\partial }_{y}{\hat{D}}_{p}\right|\right) .$

At step T314, the depth loss component L_{dpt} is evaluated based on the error loss component L_{logL1}, the edge smoothness loss component Lₑₛ, the panoptic-edge smoothness loss component Lₚₑₛ

For instance, the depth loss component L_{dpt} can be evaluated using the following expression: L_{dpt} = λ_{L1} · L_{logL1} + λₑₛ · Lₑₛ + λₚₑₛ · Lₚₑₛ, where parameters λ_{L1}, λₑₛ, λₚₑₛ are positive real numbers.

The depth loss component L_{dpt} contributes to providing plausible depth predictions for the entire image and thereby learning accurate depth features that can guide sensor fusion.

Experimental results show that the proposed model MOD is capable (once trained) of achieving accurate and reliable image segmentation, even in adverse conditions. We present below these experimental results.

**Tables 1 and 2** illustrate experimental results related to the proposed machine learning model according to embodiments of the invention.

Here, the performance of the proposed machine learning model MOD is evaluated on the MUSES dataset. Before presenting the results of these experiments, we first describe some of the implementation details used in these experiments.

The implementation of the model MOD in these experiments is as follows.

The machine learning model MOD uses a Swin-T backbone pre-trained on the ImageNet dataset and follows the training protocol of the CAFuser presented in the above-mentioned document Brödermann *et al.* The segmentation module SH of the machine learning model MOD uses the OneFormer head as presented in the above-mentioned document Jitesh Jain *et al.* All input modalities are normalized over the entire dataset and the data augmentations from CAFuser are applied.

The machine learning model MOD is trained with a batch size of 8 for 180 000 iterations on the MUSES dataset. For the multi-task loss function Lₜₒₜ, the following parameters are τ = 0.8, λ_{L1} = 0.9, λₑₛ = 0.05, λₚₑₛ = 0.05, and λ_{dpt} = 1. The machine learning model MOD is optimized using AdamW with a poly learning rate scheduler.

**Table 1 compares the performance of the proposed machine learning model MOD to those of state-of-the-art solutions for panoptic segmentation on the MUSES dataset in various environmental conditions.**

| **Model** | **Modalities** | **Backbone** | **Day** | **Night** | **Clear** | **Fog** | **Rain** | **Snow** |
|---|---|---|---|---|---|---|---|---|
| OneFormer | C | Swin-T | 57.55 | 47.83 | 58.33 | 53.68 | 53.43 | 53.77 |
| CAFuser | CLRE | Swin-T | 59.49 | 57.34 | 61.36 | 57.52 | 59.63 | 57.20 |
| **Proposed** | **CLRE** | **Swin-T** | **60.77** | **59.04** | **61.93** | **58.46** | **61.26** | **59.78** |

Here, the performance is evaluated using the standard panoptic quality metric. The following modalities are used: camera (C), lidar (L), radar (R), and event data (E).

Specifically, the OneFormer model (unimodal) presented in the above-mentioned document Jitesh Jain *et al.* is used as baseline, and the CAFuser model (multi-modal) presented in the above-mentioned document Brödermann *et al.* is the state-of-art solution.

This table first shows that the use of sensor fusion allows significant performance gains in panoptic segmentation, in particular in adverse conditions.

This table also shows that the proposed model MOD achieves significant performance gains in panoptic segmentation with regard to state-of-the-art solutions, not only in adverse condition, but in all conditions.

**Table 2 compares the performance of the proposed machine learning model MOD to those of state-of-the-art solutions for semantic segmentation on the MUSES dataset.**

| **Model** | **Modalities** | **Backbone** | **mIoU** |
|---|---|---|---|
| OneFormer | C | Swin-T | 72.80 |
| CAFuser | CLRE | Swin-T | 78.20 |
| **Proposed** | **CLRE** | **Swin-T** | **79.50** |

Here, the performance is evaluated using the standard mean Intersection over Union (mIoU) metric. This table shows that the proposed model MOD achieves outperforms state-of-the-art solutions.

Similar experiments have been conducted on the Deliver dataset, and also considering multiple other state-of-the-art solutions. The results of these experiments corroborate the above conclusions.

**Additional Variants:** Although the present invention has been described above with reference to certain specific embodiments, it will be understood that the invention is not limited by the particularities of these embodiments. Numerous variations, modifications, and developments may be made in these embodiments within the scope of the claims.

## Claims

1. A computer-implemented method for processing at least one input image (IMG) using a machine learning model (MOD), the method comprising:
- a step (S300) of computing depth features (d₁) based on the input image (IMG), depth measurements (LDR), and other sensed data (RDR, EVT) using a depth-features extraction module (DFE) of the machine learning model (MOD), and
- a step (S500) of computing one or more multi-modal feature maps (F_{M1}-F_{M3}) based on the input image (IMG), the depth measurements (LDR), the other sensed data (RDR, EVT), and the depth features (d₁) using one or more fusion modules (DGF₁-DGF₃) of the machine learning model (MOD).

2. The method according to claim 1, wherein the machine learning model (MOD) comprises multiple fusion modules (DGF₁-DGF₃), each fusion module (DGFᵢ) computing (S500) respectively a multi-modal feature map (F_{Mi}) based on:
- a feature map (F_{IMG}) of the input image (IMG), and
- a feature map (F_{LDR}) of the depth measurements (DM) or a feature map (F_{RDR}, F_{EVT}) of the other sensed data (RDR, EVT), and
- the depth features (d₁).

3. The method according to claim 1 or 2, wherein at least one fusion module (DGFᵢ) comprises one or more cross-attention modules (X-ATT).

4. The method according to any of claims 1 to 3, wherein the depth-feature extraction module (DFE) comprises:
- a multi-layer perceptron taking as input a concatenation of feature maps (F_{IMG}, F_{LDR}, F_{RDR}, F_{EVT}) of the input image (IMG), the depth measurements (LDR), and the other sensed data (RDR, EVT), and
- a residual connection adding the feature map (F_{IMG}) of the input image (IMG) to the output of the multi-layer perceptron to compute (S300) the depth features (d₁).

5. The method according to any of claims 1 to 4, comprising:
- a step (S400) of computing a condition token (CT) based on the input image (IMG) using a condition estimation module (CE) of the machine learning model (MOD),
and wherein:
- the step (S500) of computing the one or more multi-modal feature maps (F_{M1}-F_{M3}) is further based on the condition token (CT).

6. The method according to claim 5, wherein the condition estimation module (CE) comprises a transformer computing (S400) the condition token (CT) based on the input image (IMG).

7. The method according to any of claims 1 to 6, wherein the other sensed data (RDR, EVT) includes radar measurements (RDR) and/or event data (EVT) provided by an event camera.

8. The method according to any of claims 1 to 7, comprising:
- a step of segmenting (S600) the input image (IMG) based on the one or more multi-modal features (F_{M1}-F_{M3}) using a segmentation module (SH) of the machine learning model (MOD), class and/or instance labels being assigned to the pixels of the input image (IMG) to obtain a segmented image (SEG_IMG).

9. The method according to claim 8, comprising:
- a step of determining (S700) a control command (CMD) for a vehicle (VEH) or a robot based on the segmented image (SEG_IMG).

10. A computer-implemented method for training a machine learning model (MOD), the method comprising for at least one training image (IMG):
- a step (T200) of computing depth features (d₁) and one or more multi-modal feature maps (F_{M1}-F_{M3}) for the training image (TRN_IMG) using a method according to any of claims 1 to 9,
- a step (T300) of evaluating a multi-task loss function (Lₜₒₜ) comprising:
∘ a depth loss component (L_{dpt}) evaluated (T310) based on:
∘ depth predictions (*D̂*) computed by a depth-estimation module (DAH) for the training image (TRN_IMG) based on the depth features (d₁), and
∘ depth measurements (*D*) for the training image (TRN_IMG),
∘ a recognition loss component (L_{seg}) evaluated (T330) based on:
∘ recognition predictions (SEG_IMG) computed by the machine learning model (MOD) for the training image (TRN_IMG) based on the one or more multi-modal feature maps (F_{M1}-F_{M3}), and
∘ labels (S) of the training image (TRN_IMG),
- a step (T400) of updating parameters of the machine learning model (MOD) to minimize the multi-task loss function (Lₜₒₜ).

11. The method according to claim 10, wherein:
- the depth loss component (L_{dpt}) comprises:
∘ an error loss component (L_{logL1}) evaluated (T311) based on:
∘ the depth predictions (*D̂*) computed by the depth-estimation module (DAH), and
∘ the depth measurements (*D*) for the training image (TRN_IMG), and/or
∘ an edge smoothness loss component (Lₑₛ) evaluated (T312) based on:
∘ depth gradients (∂*ₓD̂,* ∂*_{y}D̂*) of the depth predictions (*D̂*) for the training image (TRN_IMG), and
∘ intensity gradients (∂*ₓI,* ∂*_{y}I*) of the training image (TRN_IMG), and/or
∘ a panoptic-edge smoothness loss component (Lₚₑₛ) evaluated (T313) based on:
∘ depth gradients (∂*ₓD̂,* ∂*_{y}D̂*) of the depth predictions (*D̂*) for the training image (TRN_IMG), and
∘ panoptic labels (S) of the training image (TRN_IMG),
- and/or wherein the multi-task loss function (Lₜₒₜ) comprises:
∘ a condition loss component (L_{cnd}) evaluated (T320) based on:
∘ a condition token (CT) computed by a condition estimation module (CE) of the machine learning model (MOD), and
∘ scene attributes associated with the training image (TRN_IMG),
- and/or wherein the recognition loss component (L_{seg}) is a segmentation loss component evaluated (T330) based on:
∘ the segmentation predictions (SEG_IMG) provided by a segmentation module (SH) of the machine learning model (MOD) for the training image (TRN_IMG) based on the one or more multi-modal feature maps (F_{M1}-F_{M3}), and
∘ the labels (S) of the training image (TRN_IMG).

12. A device (APP) for processing at least one input image (IMG), the device (APP) comprising at least one processor (PROC) and memory (MEM), and being configured to implement a machine learning model (MOD) comprising:
- a depth-features extraction module (DFE) configured to compute (S300) depth features (d₁) based on the input image (IMG), depth measurements (LDR) and other sensed data (RDR, EVT), and
- one or more fusion modules (DGF₁-DGF₃) configured to compute (S500) one or more multi-modal feature maps (F_{M1}-F_{M3}) based on the input image (IMG), the depth measurements (LDR), the other sensed data (RDR, EVT), and the depth features (d₁).

13. A system (SYS) comprising:
- a camera (CAM) for capturing an image (IMG),
- a set of sensors (SENS) comprising a depth sensor for acquiring depth measurements (LDR), and one or more other sensors for acquiring other sensed data (RDR, EVT), and
- an image processing device (APP) according to claim 12 for processing the captured image (IMG).

14. The system (SYS) according to claim 13, wherein the system (SYS) further comprises:
- a control device (CTRL) configured to determine (S700) a control command (CMD) for a vehicle (VEH) or a robot based on the outputs (SEG_IMG) of the image processing device (APP).

15. A vehicle (VEH) or a robot comprising an image processing device (APP) according to claim 12 or a system (SYS) according to claim 13 or 14.

16. A computer program (PROG) comprising instructions which, when the program (PROG) is executed by at least one processor (PROC), cause said at least one processor (PROC) to implement a method according to any one of claims 1 to 11.

## Amended claims

### Amended claims in accordance with Rule 137(2) EPC.

1. A computer-implemented method for processing at least one input image (IMG) using a machine learning model (MOD), the method comprising:
- a step (S300) of computing depth features (dₗ) based on the input image (IMG), depth measurements (LDR), and other sensed data (RDR, EVT) using a depth-features extraction module (DFE) of the machine learning model (MOD), and
- a step (S500) of computing one or more multi-modal feature maps (F_{M1}-F_{M3}) based on the input image (IMG), the depth measurements (LDR), the other sensed data (RDR, EVT), and the depth features (d₁) using one or more fusion modules (DGF₁-DGF₃) of the machine learning model (MOD), the method being **characterized in that** the machine learning model (MOD) comprises multiple fusion modules (DGF₁-DGF₃), each fusion module (DGFᵢ) computing (S500) respectively a multi-modal feature map (F_{Mi}) taking as input:
- a feature map (F_{IMG}) of the input image (IMG),
- a feature map (F_{LDR}) of the depth measurements (DM) or a feature map (F_{RDR}, F_{EVT}) of the other sensed data (RDR, EVT), and
- the depth features (dₗ).

2. The method according to claim 1, wherein at least one fusion module (DGFᵢ) comprises one or more cross-attention modules (X-ATT).

3. The method according to claim 1 or 2, wherein the depth-feature extraction module (DFE) comprises:
- a multi-layer perceptron taking as input a concatenation of feature maps (F_{IMG}, F_{LDR}, F_{RDR}, F_{EVT}) of the input image (IMG), the depth measurements (LDR), and the other sensed data (RDR, EVT), and
- a residual connection adding the feature map (F_{IMG}) of the input image (IMG) to the output of the multi-layer perceptron to compute (S300) the depth features (dₗ).

4. The method according to any of claims 1 to 3, comprising:
- a step (S400) of computing a condition token (CT) based on the input image (IMG)
using a condition estimation module (CE) of the machine learning model (MOD), and wherein:
- the step (S500) of computing the one or more multi-modal feature maps (F_{M1}-F_{M3}) is further based on the condition token (CT).

5. The method according to claim 4, wherein the condition estimation module (CE) comprises a transformer computing (S400) the condition token (CT) based on the input image (IMG).

6. The method according to any of claims 1 to 5, wherein the other sensed data (RDR, EVT) includes radar measurements (RDR) and/or event data (EVT) provided by an event camera.

7. The method according to any of claims 1 to 6, comprising:
- a step of segmenting (S600) the input image (IMG) based on the one or more multi-modal features (F_{M1}-F_{M3}) using a segmentation module (SH) of the machine learning model (MOD), class and/or instance labels being assigned to the pixels of the input image (IMG) to obtain a segmented image (SEG_IMG).

8. The method according to claim 7, comprising:
- a step of determining (S700) a control command (CMD) for a vehicle (VEH) or a robot based on the segmented image (SEG_IMG).

9. A computer-implemented method for training a machine learning model (MOD), the method comprising for at least one training image (IMG):
- a step (T200) of computing depth features (d₁) and one or more multi-modal feature maps (F_{M1}-F_{M3}) for the training image (TRN_IMG) using a method according to any of claims 1 to 8,
- a step (T300) of evaluating a multi-task loss function (Lₜₒₜ) comprising:
o a depth loss component (L_{dpt}) evaluated (T310) based on:
∘ depth predictions (D) computed by a depth-estimation module (DAH) for the training image (TRN_IMG) based on the depth features (dₗ), and
∘ depth measurements (D) for the training image (TRN_IMG),
o a recognition loss component (L_{seg}) evaluated (T330) based on:
∘ recognition predictions (SEG_IMG) computed by the machine learning model (MOD) for the training image (TRN_IMG) based on the one or more multi-modal feature maps (F_{M1}-F_{M3}), and
∘ labels (S) of the training image (TRN_IMG),
- a step (T400) of updating parameters of the machine learning model (MOD) to minimize the multi-task loss function (Lₜₒₜ).

10. The method according to claim 9, wherein:
- the depth loss component (L_{dpt}) comprises:
o an error loss component (L_{logL1}) evaluated (T311) based on:
∘ the depth predictions (*D̂*) computed by the depth-estimation module (DAH), and
∘ the depth measurements (*D*) for the training image (TRN_IMG), and/or
∘ an edge smoothness loss component (Lₑₛ) evaluated (T312) based on:
∘ depth gradients (∂*ₓD̂, ∂_{y}D̂*) of the depth predictions (*D̂*) for the training image (TRN_IMG), and
∘ intensity gradients (∂*ₓI, ∂_{y}I*) of the training image (TRN_IMG), and/or
o a panoptic-edge smoothness loss component (Lₚₑₛ) evaluated (T313) based on:
∘ depth gradients (∂*ₓD̂, ∂_{y}D̂*) of the depth predictions (*D̂*) for the training image (TRN_IMG), and
∘ panoptic labels (S) of the training image (TRN_IMG),
- and/or wherein the multi-task loss function (Lₜₒₜ) comprises:
o a condition loss component (L_{end}) evaluated (T320) based on:
∘ a condition token (CT) computed by a condition estimation module (CE) of the machine learning model (MOD), and
∘ scene attributes associated with the training image (TRN_IMG),
- and/or wherein the recognition loss component (L_{seg}) is a segmentation loss component evaluated (T330) based on:
∘ the segmentation predictions (SEG_IMG) provided by a segmentation module (SH) of the machine learning model (MOD) for the training image (TRN_IMG) based on the one or more multi-modal feature maps (F_{M1}-F_{M3}), and
∘ the labels (S) of the training image (TRN_IMG).

11. A device (APP) for processing at least one input image (IMG), the device (APP) comprising at least one processor (PROC) and memory (MEM), and being configured to implement a machine learning model (MOD) comprising:
- a depth-features extraction module (DFE) configured to compute (S300) depth features (d₁) based on the input image (IMG), depth measurements (LDR) and other sensed data (RDR, EVT), and
- one or more fusion modules (DGF₁-DGF₃) configured to compute (S500) one or more multi-modal feature maps (F_{M1}-F_{M3}) based on the input image (IMG), the depth measurements (LDR), the other sensed data (RDR, EVT), and the depth features (dₗ), wherein the machine learning model (MOD) comprises multiple fusion modules (DGF₁-DGF₃), each fusion module (DGFᵢ) being congigured to compute (S500) respectively a multi-modal feature map (F_{Mi}) taking as input:
- a feature map (F_{IMG}) of the input image (IMG),
- a feature map (F_{LDR}) of the depth measurements (DM) or a feature map (F_{RDR}, F_{EVT}) of the other sensed data (RDR, EVT), and
- the depth features (dₗ).

12. A system (SYS) comprising:
- a camera (CAM) for capturing an image (IMG),
- a set of sensors (SENS) comprising a depth sensor for acquiring depth measurements (LDR), and one or more other sensors for acquiring other sensed data (RDR, EVT), and
- an image processing device (APP) according to claim 11 for processing the captured image (IMG).

13. The system (SYS) according to claim 12, wherein the system (SYS) further comprises:
- a control device (CTRL) configured to determine (S700) a control command (CMD) for a vehicle (VEH) or a robot based on the outputs (SEG_IMG) of the image processing device (APP).

14. A vehicle (VEH) or a robot comprising an image processing device (APP) according to claim 11 or a system (SYS) according to claim 12 or 13.

15. A computer program (PROG) comprising instructions which, when the program (PROG) is executed by at least one processor (PROC), cause said at least one processor (PROC) to implement a method according to any one of claims 1 to 10.
